# DEMANDE DE BREVET EUROPEEN

(11) **EP 4 843 458 A1**
(43) Date de publication de la demande: **25.11.2026**
(21) Numéro de dépôt: 25178174.6
(22) Date de dépôt: 22.05.2025
(51) Int. Cl.: A47J 37/06

(54) **APPAREIL DE PREPARATION CULINAIRE COMPRENANT UN BOITIER ET UN USTENSILE DE CUISSON AMOVIBLE**

(71) Demandeur: SEB S.A., 69130 Ecully (FR)
(72) Inventeur: ALLEMAND, Bernard, 69134 ECULLY CEDEX (FR); FRADET, Gautier, 69134 ECULLY CEDEX (FR); DUSSART, Marie, 69134 ECULLY CEDEX (FR); PETITALLOT, Johann, 69134 ECULLY CEDEX (FR); PRIETO, Guillaume, 69134 ECULLY CEDEX (FR); SEURAT, Frédéric, 69134 ECULLY CEDEX (FR)
(74) Mandataire: SEB Développement

(57) **Abrégé**

Appareil de préparation culinaire, comprenant :
- un boîtier, comprenant une ouverture d'accès,
- un ustensile de cuisson, comprenant une cuve de cuisson et une portion de paroi, dans lequel :
. la cuve de cuisson est agencée pour être reçue dans le boîtier,
. la portion de paroi est agencée pour être accouplée de manière réversible à la cuve de cuisson,
. la portion de paroi est agencée pour au moins partiellement obstruer l'ouverture d'accès,

caractérisé en ce que l'appareil de préparation culinaire comprend un dispositif de sécurité agencé pour inhiber au moins une fonction de cuisson si la portion de paroi et/ou la cuve de cuisson est absente de l'ouverture d'accès respectivement de l'espace de cuisson.

## Description

### Domaine technique de l'invention

La présente invention concerne de manière générale les appareils de préparation culinaire, et en particulier l'invention se rapporte aux appareils de préparation culinaire comprenant un boîtier et un ustensile de cuisson amovible qui peut embarquer une portion de paroi.

### État de la technique

Il est connu dans l'art antérieur des appareils de préparation culinaire de prévoir un ustensile de cuisson qui embarque une cuve de cuisson et une portion de paroi amovible de la cuve de cuisson. Cette portion de paroi est agencée pour obstruer une ouverture d'accès à une enceinte de cuisson et vient en continuité d'une paroi du boîtier lorsque l'ustensile de cuisson est installé dans l'appareil. Un tel ustensile de cuisson peut présenter des inconvénients liés à la sécurité, en particulier si l'appareil de préparation culinaire n'est pas bien mis en configuration avant utilisation. Il est connu dans ce type d'appareil de préparation culinaire, d'utiliser un dispositif de sécurité inhibant la fonction de cuisson si la portion de paroi n'obstrue pas l'ouverture d'accès. Cependant, une mauvaise utilisation de l'ustensile de cuisson, notamment un positionnement de la paroi amovible sans la présence de la cuve de cuisson peut aboutir à une détérioration de l'appareil préparation culinaire et à un risque de blessure pour l'utilisateur.

### Exposé de l'invention

Un but de la présente invention est de répondre aux inconvénients de l'art antérieur mentionnés ci-dessus et en particulier, tout d'abord, de proposer un appareil de préparation culinaire comprenant un ustensile de cuisson et qui limite le risque lié à une mauvaise utilisation de l'appareil par l'utilisateur et lui évite ainsi tout risque de blessure ou brûlure par exemple lors d'un cycle de cuisson effectué par l'appareil de préparation culinaire.

Pour cela un premier aspect de l'invention concerne un appareil de préparation culinaire, comprenant :
- un boîtier, définissant un espace de cuisson et comprenant une ouverture d'accès vers l'espace de cuisson,
- un ustensile de cuisson, comprenant une cuve de cuisson et une portion de paroi, dans lequel :
   . la cuve de cuisson est agencée pour être reçue dans l'espace de cuisson,
   . la portion de paroi est agencée pour être accouplée de manière réversible à la cuve de cuisson,
   . la portion de paroi, accouplée à la cuve de cuisson reçue dans l'espace de cuisson, est agencée pour au moins partiellement obstruer l'ouverture d'accès vers l'espace de cuisson,
- des moyens de cuisson comprenant des moyens de chauffage disposés entre un organe de ventilation et l'espace de cuisson,
l'appareil préparation culinaire comprenant un dispositif de sécurité agencé pour :
- détecter une présence ou une absence de la portion de paroi dans l'ouverture d'accès,
- inhiber au moins une fonction de cuisson si la portion de paroi est absente de l'ouverture d'accès,
caractérisé en ce que le dispositif de sécurité est en outre agencé pour :
- détecter une présence ou une absence de la cuve de cuisson dans l'espace de cuisson,
- inhiber au moins une fonction de cuisson si la cuve de cuisson est absente de l'espace de cuisson.

Selon la mise en œuvre ci-dessus, l'appareil de préparation culinaire comprend un dispositif de sécurité prévu pour détecter si la portion de paroi embarquée sur l'ustensile de cuisson est correctement positionnée sur la cuve de cuisson mais également si la cuve de cuisson est absente de l'espace de cuisson alors que la portion de paroi pourrait être bien positionnée dans l'ouverture d'accès à l'espace de cuisson. Le fonctionnement de l'appareil de préparation culinaire (sa mise en route, ou le lancement d'un cycle de cuisson) est limité ou même interdit si la portion de paroi n'est pas détectée à sa position prévue pour un fonctionnement sécurisé (obstruant le passage d'accès à l'espace de cuisson) et/ou si la cuve de cuisson n'est pas positionnée dans l'espace de cuisson.

L'appareil de préparation culinaire peut être défini par les caractéristiques suivantes, prises individuellement ou en combinaison.

Selon un mode de réalisation, l'ustensile de cuisson comprend un dispositif de détection d'accouplement, comprenant au moins un témoin d'accouplement, mobile entre :
- une position de repos, occupée lorsque la cuve de cuisson est désaccouplée de la portion de paroi,
- une position activée, occupée lorsque la cuve de cuisson est accouplée à la portion de paroi.

Selon un mode de réalisation, le témoin d'accouplement :
- est agencé sur l'une de la cuve de cuisson et de la portion de paroi,
- est agencé pour être déplacé vers la position activée par l'autre de la cuve de cuisson et de la portion de paroi. En conséquence, seul un accouplement effectif entre la cuve de cuisson et la portion de paroi peut provoquer le passage du témoin d'accouplement dans la position activée.

Selon un mode de réalisation, le dispositif de détection d'accouplement comprend un organe élastique de rappel agencé pour exercer sur le témoin d'accouplement un effort de rappel vers la position de repos. Autrement dit, dès que la cuve de cuisson et la portion de paroi sont désaccouplées, le témoin d'accouplement est automatiquement repositionné dans la position de repos, ce qui interdira la mise en route de l'appareil de préparation culinaire.

Selon un mode de réalisation, le témoin d'accouplement est agencé sur la portion de paroi, et le dispositif de détection d'accouplement comprend un organe de transmission tel qu'un culbuteur, comprenant :
- une portion d'entrée, agencée pour être actionnée par une portion de la cuve de cuisson au moins lors d'une opération d'accouplement de la portion de paroi sur la cuve de cuisson,
- une portion de sortie, engagée ou en contact avec le témoin d'accouplement.

Selon un mode de réalisation, la portion de la cuve de cuisson agencée pour actionner la portion d'entrée est excentrée par rapport au corps de la cuve de cuisson.

Selon un mode de réalisation, le dispositif de sécurité comprend un détecteur d'accouplement pour détecter le témoin d'accouplement au moins en position activée. On peut prévoir un interrupteur, par exemple un interrupteur de sécurité qui coupe un circuit d'alimentation électrique, comme par exemple le circuit d'alimentation de moyens de cuisson.

Selon un mode de réalisation, l'appareil de préparation culinaire le dispositif de sécurité est agencé pour inhiber le fonctionnement des moyens de chauffage, et de préférence pour inhiber également le fonctionnement de l'organe de ventilation, si la portion de paroi est absente de l'ouverture d'accès et cela même si la cuve de cuisson est présente dans l'espace de cuisson ou si la cuve de cuisson est absente de l'espace de cuisson et cela même si la portion de paroi est présente dans l'ouverture d'accès.

Selon un mode de réalisation, l'appareil de préparation culinaire comprend une interface homme machine, et le dispositif de sécurité est agencé pour envoyer un signal d'information si la portion de paroi est absente de l'ouverture d'accès (ou mal positionnée par rapport à cette dernière), et/ou si la cuve de cuisson est absente de l'espace de cuisson afin de commander l'interface homme machine pour l'envoi d'un message d'information à un utilisateur.

Selon un mode de réalisation, l'appareil de préparation culinaire comprend une unité de commande électronique, connectée aux moyens de cuisson, et/ou à l'interface homme machine, et/ou au dispositif de sécurité, et prévue pour commander le fonctionnement de l'appareil de préparation culinaire, en particulier la désactivation ou l'interdiction de démarrage si la portion de paroi n'est pas détectée à sa position correcte et/ou si la cuve de cuisson est absente de l'espace de cuisson et cela même si la portion de paroi est présente.

Selon un mode de réalisation, l'ustensile de cuisson comprend une interface de préhension, solidaire de la portion de paroi.

### Description des figures

D'autres caractéristiques et avantages de la présente invention apparaîtront plus clairement à la lecture de la description détaillée qui suit de mode(s) de réalisation de l'invention donné(s) à titre d'exemple(s) nullement limitatif(s) et illustré(s) par les dessins annexés, dans lesquels :
[fig. 1] représente une vue en perspective d'un appareil de préparation culinaire comprenant notamment un boitier et un ustensile de cuisson ;
[fig. 2] représente une vue en perspective de l'ustensile de cuisson de la figure 1, comprenant une cuve de cuisson et une interface de préhension accouplées entre elles ;
[fig. 3] représente une vue en perspective de l'ustensile de cuisson de la figure 2 avec la cuve de cuisson et l'interface de préhension désaccouplées ;
[fig. 4] représente une vue en perspective de face de l'interface de préhension de l'ustensile de cuisson de la figure 2 ou 3 ;
[fig. 5] représente une vue en perspective arrière de l'interface de préhension de l'ustensile de cuisson de la figure 2 ou 3 ;
[fig. 6] représente une vue en perspective de dessus de la cuve de cuisson de l'ustensile de cuisson de la figure 2 ou 3 ;
[fig. 7] représente une vue en coupe de l'ustensile de cuisson de la figure 2 dans un plan parallèle au plan y-z du repère de la figure 2 ;
[fig. 8] représente une vue arrière d'une partie interne de l'interface de préhension de l'ustensile de cuisson de la figure 2 ou 3 ;
[fig. 9] représente une vue en coupe de la partie interne de l'interface de préhension de la figure 8 dans un plan de coupe II-II de la figure 8 ;
[fig. 10] représente une vue en coupe de l'interface de préhension de l'ustensile de cuisson de la figure 8 dans un plan de coupe I-I de la figure 8 et d'une partie du boitier de l'appareil de préparation culinaire ;
[fig. 11] représente une vue en perspective de dessus de la cuve de cuisson de l'ustensile de cuisson de la figure 2 ou 3, avec un couvercle à accoupler sur la cuve de cuisson ;
[fig. 12] représente une vue en perspective de dessus de la cuve de cuisson de l'ustensile de cuisson de la figure 2 ou 3, avec le couvercle accouplé sur la cuve de cuisson ;
[fig. 13] représente une vue schématique en coupe selon un plan parallèle au plan y-z du repère de la figure 2, de la cuve de cuisson et de l'interface de préhension de l'ustensile de cuisson de la figure 2 ou 3 avant accouplement ;
[fig. 14] représente la cuve de cuisson et l'interface de préhension de la figure 13, lors d'une première phase d'accouplement ;
[fig. 15] représente la cuve de cuisson et l'interface de préhension de la figure 13, lors d'une deuxième phase d'accouplement;
[fig. 16] représente la cuve de cuisson et l'interface de préhension de la figure 13, accouplées entre elles ;
[fig. 17] représente une première variante de réalisation de la cuve de cuisson et de l'interface de préhension de la figure 13 ;
[fig. 18] représente une deuxième variante de réalisation de la cuve de cuisson et de l'interface de préhension de la figure 13 ;
[fig. 19] représente une troisième variante de réalisation de la cuve de cuisson et de l'interface de préhension de la figure 13.

### Description détaillée de mode(s) de réalisation

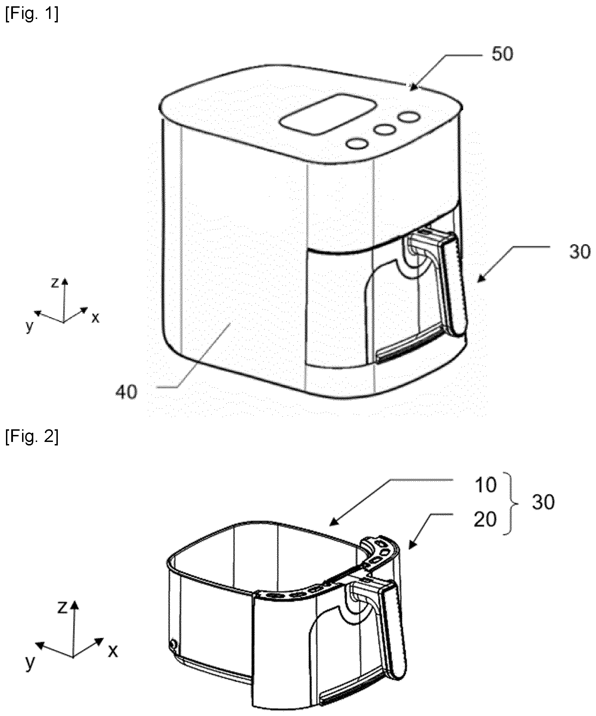

La figure 1 représente une vue en perspective d'un appareil de préparation culinaire formant dans cet exemple un appareil de cuisson et comprenant notamment :
- un boitier 40,
- un ustensile de cuisson 30,
- une interface homme machine 50.

Dans l'exemple de la figure 1, l'appareil de préparation culinaire est un appareil de cuisson domestique, prévu pour cuire les aliments par rayonnement et/ou convection. On peut donc prévoir typiquement des moyens de cuisson, c'est-à-dire des moyens de chauffage et/ou des moyens de ventilation logés dans le boîtier 40. Les moyens de chauffage peuvent comprendre des moyens de chauffage par effet joule (un ou des éléments chauffants résistifs), et les moyens de ventilation peuvent comprendre un organe de ventilation tel un moto-ventilateur de manière à générer des moyens de chauffage par convection. Toutefois, on peut aussi prévoir additionnellement des moyens de chauffage par conduction, par induction, ou même par micro-ondes.

L'appareil de préparation culinaire de la figure 1 comprend typiquement au moins une unité de commande électronique et/ou des moyens de stockage d'instructions ou de commandes, et l'interface homme machine 50 permet à un utilisateur de sélectionner des recettes de cuisine, des instructions de commande, pour commander et/ou piloter l'appareil de préparation culinaire. L'interface homme machine 50 peut typiquement comprendre un écran d'affichage et/ou tactile, et des boutons de commande.

Le boîtier 40 forme une carcasse externe de l'appareil de préparation culinaire, et l'ustensile de cuisson 30 comprend une portion de paroi qui forme une façade de l'appareil de préparation culinaire, qui prolonge le boîtier 40 (les surfaces sont continues et viennent en prolongement ou en continuité les unes des autres comme on peut le voir figure 1).

Sur la figure 1, un repère cartésien x/y/z est représenté, pour définir notamment une largeur de l'appareil selon l'axe x, une profondeur de l'appareil selon l'axe y et une hauteur de l'appareil selon l'axe z. On peut noter figure 1 que l'interface homme machine 50 est agencée sur le dessus de l'appareil de préparation culinaire, mais elle pourrait être agencée sur une paroi latérale, sur la façade, ou même être (partiellement) déportée sur un appareil électronique portable.

La figure 2 représente une vue en perspective de l'ustensile de cuisson 30 de la figure 1, comprenant une cuve de cuisson 10 et une interface de préhension 20 accouplées entre elles. Dans cet exemple de réalisation, l'ustensile de cuisson 30 comprend une cuve de cuisson 10 prévue pour recevoir des aliments à cuire et à positionner dans un espace de cuisson interne et défini à l'intérieur du boîtier 40. Typiquement, lorsque l'ustensile de cuisson 30 est reçu dans l'appareil de préparation culinaire comme sur la figure 1, la cuve de cuisson 10 positionne les aliments reçus en regard des moyens de chauffage et/ou en regard des moyens de ventilation.

Sur la figure 2, la cuve de cuisson 10 est accouplée à l'interface de préhension 20 pour former un ensemble aisé à saisir et à manipuler pour un utilisateur.

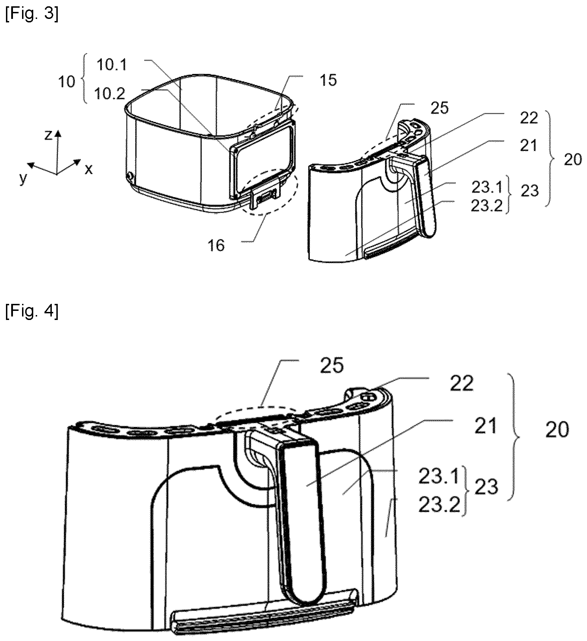

La figure 3 représente une vue en perspective de l'ustensile de cuisson 30 de la figure 2 avec la cuve de cuisson 10 et l'interface de préhension 20 désaccouplées et dissociées l'une de l'autre.

Sur cette figure 3, et sur la figure 4, on peut noter que l'interface de préhension 20 comprend :
- une poignée de préhension 21,
- un bouton de commande 22, situé en partie supérieure de la poignée de préhension 21 (selon l'axe z),
- une portion de paroi 23, comprenant une vitre transparente 23.1 et une paroi opaque 23.2,
- une fixation supérieure de préhension 25, embarquée sur l'interface de préhension 20, et située en partie supérieure de la poignée de préhension 21 (selon l'axe z), en arrière du bouton de commande 22 (selon l'axe y).

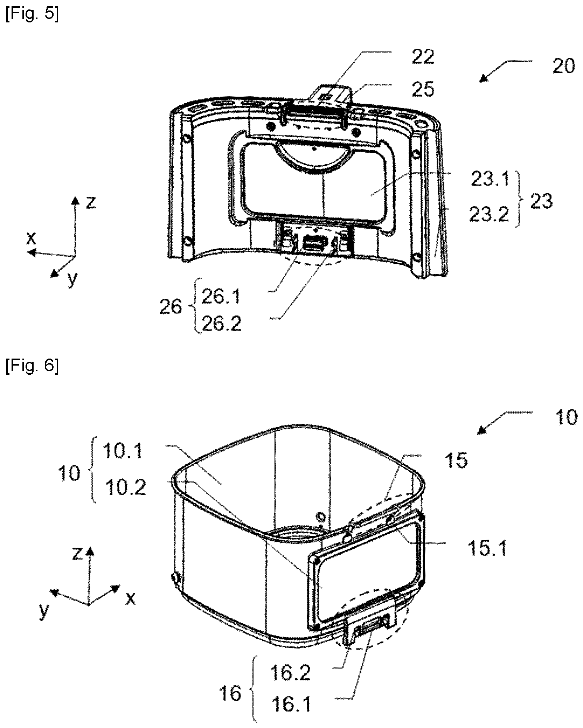

Sur la figure 5, on peut noter que l'interface de préhension 20 comprend :
- le bouton de commande 22, situé en partie supérieure de la poignée de préhension 21,
- la portion de paroi 23, comprenant la vitre transparente 23.1 et la paroi opaque 23.2,
- la fixation supérieure de préhension 25, embarquée sur l'interface de préhension 20,
- une fixation inférieure de préhension 26 comprenant notamment un crochet mobile 26.1 et des crochets fixes 26.2 agencés de part et d'autre du crochet mobile 26.1 selon l'axe x.

Comme le montre la figure 3 et plus particulièrement la figure 6, la cuve de cuisson 10 comprend quant à elle :
- un corps 10.1, formant une cuve de préférence métallique,
- un hublot transparent 10.2,
- une fixation supérieure de cuve 15, embarquée sur la cuve de cuisson 10, agencée sur une partie supérieure de la cuve de cuisson 10 selon l'axe z, et comprenant notamment une tige de support 15.1,
- une fixation inférieure de cuve 16, embarquée sur la cuve de cuisson 10, agencée sur une partie inférieure de la cuve de cuisson 10 et comprenant notamment une tige de verrouillage 16.1 et des empreintes de localisation 16.2 agencées de part et d'autre de la tige de verrouillage 16.1 selon l'axe x.

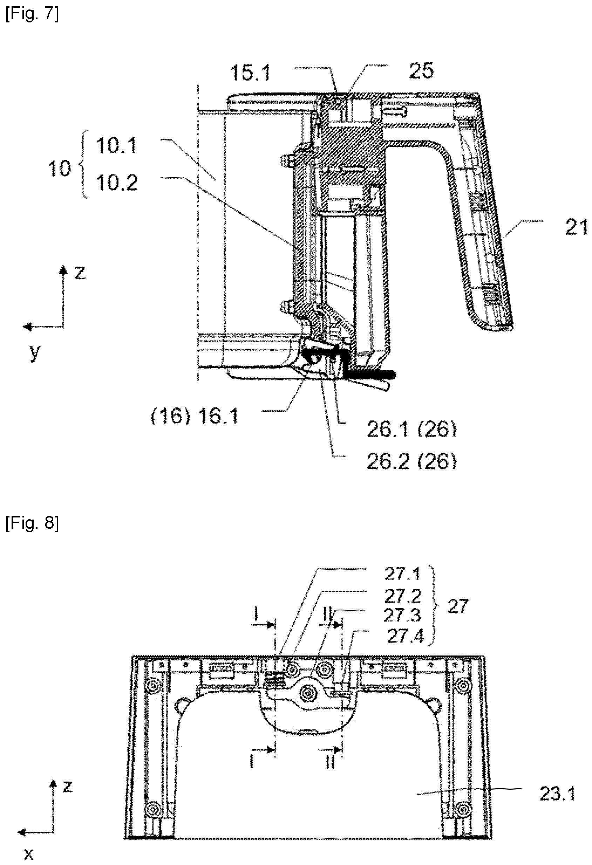

La figure 7 représente une vue en coupe de l'ustensile de cuisson 30 de la figure 2 dans un plan parallèle au plan y-z du repère de la figure 2, pour montrer la cuve de cuisson 10 accouplée avec l'interface de préhension 20.

On peut noter figure 7 que la fixation supérieure de cuve 15 et la fixation supérieure de préhension 25 sont en prise l'une avec l'autre. En particulier, la fixation supérieure de préhension 25 comprend une forme en U dirigée vers le haut selon l'axe z, qui reçoit la tige de support 15.1 disposée sur la partie supérieure de la cuve de cuisson 10 selon l'axe z. Ainsi, le poids de la cuve de cuisson 10 est repris par la fixation supérieure de préhension 25 recevant la tige de support 15.1. L'accouplement de la fixation supérieure de préhension 25 avec sa forme en U dirigée vers le haut et la tige de support 15.1 définissent ainsi une liaison pivot entre la cuve de cuisson 10 et l'interface de préhension 20.

Dans la partie inférieure de la figure 7, on peut noter que la fixation inférieure de préhension 26 est engagée avec la fixation inférieure de cuve 16. En particulier, on peut noter que les crochets fixes 26.2 sont engagés dans les empreintes de localisation 16.2 (non visibles figure 7). Par ailleurs, le crochet mobile 26.1 (en noir) est rabattu sur la tige de verrouillage 16.1. Le crochet mobile 26.1 est mobile en rotation autour d'un axe parallèle à l'axe x, comme on peut le voir figure 7, avec la silhouette du crochet mobile 26.1 décalée angulairement par rapport au crochet mobile 26.1 en noir.

Comme le montre la figure 7 :
- le crochet mobile 26.1, engagé avec la tige de verrouillage 16.1 interdit toute rotation de l'interface de préhension 20 par rapport à la cuve de cuisson 10;
- par ailleurs, les crochets fixes 26.2 engagés dans les empreintes de localisation 16.2 limitent la translation de l'interface de préhension 20 par rapport à la cuve de cuisson 10 selon les axes x et z.
La forme du crochet mobile 26.1 est configurée, notamment via l'inclinaison de sa rampe de frottement venant au contact de la tige de verrouillage 16.1 lors du mouvement d'accouplement de l'interface de préhension 20 sur la cuve de cuisson 10, de telle sorte à enclencher la fixation de l'interface de préhension 20 sur la cuve de cuisson 10 lors de l'insertion de la cuve de cuisson 10 dans l'espace de cuisson interne de l'appareil de préparation culinaire. Cela réduit le risque que l'interface de préhension 20 actionne le dispositif de sécurité malgré le fait que la fixation supérieure de cuve 15 et la fixation supérieure de préhension 25 soient en prise l'une avec l'autre mais que la fixation inférieure de préhension 26 ne soit pas forcément bien engagée avec la fixation inférieure de cuve 16 avant de pousser la cuve de cuisson 10 dans l'espace de cuisson.

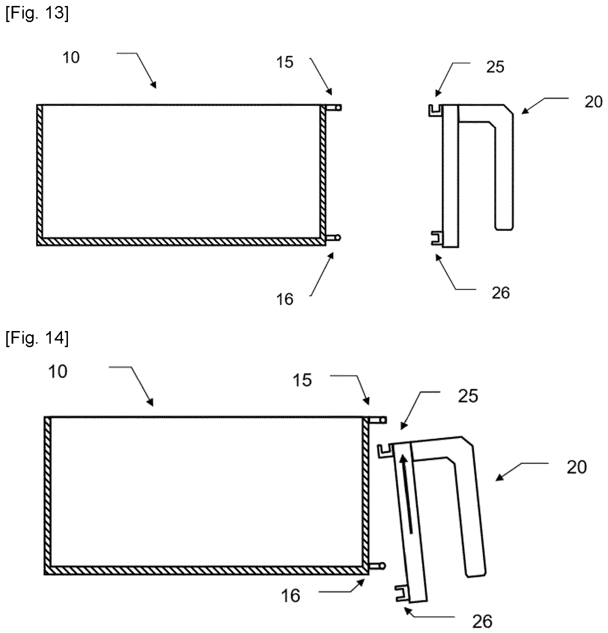

Dans la configuration de la figure 7, l'interface de préhension 20 est verrouillée en position par rapport à la cuve de cuisson 10. Lorsque le crochet mobile 26.1 est déplacé (suite à une action de l'utilisateur sur le bouton de commande 22) et occupe la position décalée angulairement de sa silhouette figure 7, on peut déplacer l'interface de préhension 20 par rapport à la cuve de cuisson 10 dans le sens anti horaire, et ensuite dégager vers le bas la fixation supérieure de préhension 25 (et sa forme en U dirigée vers le haut) pour libérer la tige de support 15.1. La séquence d'accouplement et de désaccouplement sera expliquée plus en détail en référence aux figures 13 à 16.

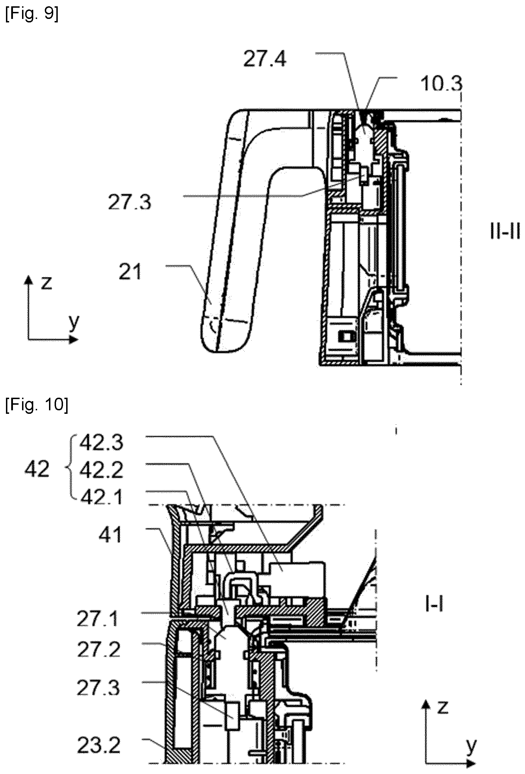

Comme le montre la figure 8, l'ustensile de cuisson 30 peut comprendre un dispositif de détection d'accouplement 27, comprenant au moins un témoin d'accouplement, 27.1 mobile entre :
- une position de repos, occupée lorsque la cuve de cuisson 10 est désaccouplée de l'interface de préhension 20,
- une position activée (celle de la figure 8 ou 10), occupée lorsque la cuve de cuisson 10 est accouplée avec l'interface de préhension 20. La figure 8 représente une vue arrière d'une partie interne de l'interface de préhension 20 de la figure 2 ou 3 pour bien montrer le dispositif de détection d'accouplement 27, comprenant :
   - le témoin d'accouplement, 27.1,
   - un culbuteur 27.3, pivotant autour d'un axe de culbuteur,
   - un piston de commande 27.4, agencé pour être actionné par un organe de détrompage 10.3 solidaire de la cuve de cuisson 10, et éventuellement
   - un ressort de rappel 27.2, prévu pour ramener le témoin d'accouplement, 27.1 vers le bas (selon l'axe z).

Le ressort de rappel 27.2 n'est pas indispensable et il n'est pas gênant que le témoin d'accouplement 27.1 occupe une position quelconque entre la position activée et la position de repos lorsque la cuve de cuisson 10 est désaccouplée de l'interface de préhension 20.

La figure 9 représente une vue en coupe de l'ustensile de cuisson 30 de la figure 8 dans un plan de coupe II-II de la figure 8. On peut noter que l'organe de détrompage 10.3 agit sur le piston de commande 27.4 (en le poussant vers le bas), qui agit à son tour sur le culbuteur 27.3.

La figure 10 représente une vue en coupe de l'ustensile de cuisson 30 de la figure 8 dans un plan de coupe I-I de la figure 8. On peut noter que le culbuteur 27.3 (poussé comme le montre la figure 9 par le piston de commande 27.4 et l'organe de détrompage 10.3) pousse vers le haut le témoin d'accouplement 27.1 malgré le ressort de rappel 27.2. En conséquence, un détecteur d'accouplement 42 (comprenant une touche de palpage 42.1, un levier de renvoi 42.2 et un interrupteur de détection 42.3), logé derrière une paroi 41 du boîtier 40, peut détecter que la cuve de cuisson 10 est effectivement bien accouplée avec l'interface de préhension 20.

L'interface de préhension 20 peut présenter une encoche sur sa face arrière pour permettre le passage de la touche de palpage 42.1 en vue de son alignement avec témoin d'accouplement 27.1 lors de l'insertion de l'ustensile de cuisson (cuve de cuisson 10 et interface de préhension 20) dans l'appareil de préparation culinaire.

Un tel dispositif de détection d'accouplement 27 peut faire partie d'un dispositif de sécurité pour permettre de détecter que la cuve de cuisson 10 est bien accouplée avec l'interface de préhension 20 avant de lancer un démarrage de l'appareil de préparation culinaire. En particulier, l'unité de commande de l'appareil de préparation culinaire peut interdire toute opération ou tout fonctionnement de l'appareil de préparation culinaire (et en particulier l'activation des moyens de chauffage et/ou de ventilation) si la cuve de cuisson 10 n'est pas accouplée avec l'interface de préhension 20. En effet, si la cuve de cuisson 10 non accouplée avec l'interface de préhension 20 est tout de même installée dans le boitier 40, la façade de l'appareil de préparation culinaire (la portion de paroi 23, comprenant la vitre transparente 23.1, la paroi opaque 23.2, et embarquée sur l'interface de préhension 20) sera absente et le fonctionnement ne serait pas sécurisé.

De la même manière, si la façade de l'appareil de préparation culinaire est tout de même installée sur l'appareil mais que la cuve de cuisson est absente alors l'unité de commande de l'appareil de préparation culinaire peut interdire toute opération ou tout fonctionnement de l'appareil de préparation culinaire.

En outre, l'organe de détrompage 10.3 peut comprendre la tige de support 15.1, si bien que lorsque la fixation supérieure de cuve 15 et la fixation supérieure de préhension 25 sont en prise l'une avec l'autre alors le piston de commande 27.4 est poussé vers le bas et sous l'action du culbuteur 27.3 le témoin d'accouplement 27.1 est repoussé vers le haut.

Dans ce cas, la fixation supérieure de préhension 25 de l'interface de préhension 20 comprend une gorge de réception de la tige de support 15.1 et le piston de commande 27.4, dans sa position haute, débouche dans cette gorge sans pour autant dépasser au-delà de la hauteur de l'interface de préhension 20.

La tige de support 15.1 peut également être légèrement excentrée en direction du piston de commande 27.4 afin de permettre d'actionner le piston de commande 27.4 sans pour autant gêner au mouvement du témoin d'accouplement 27.1.

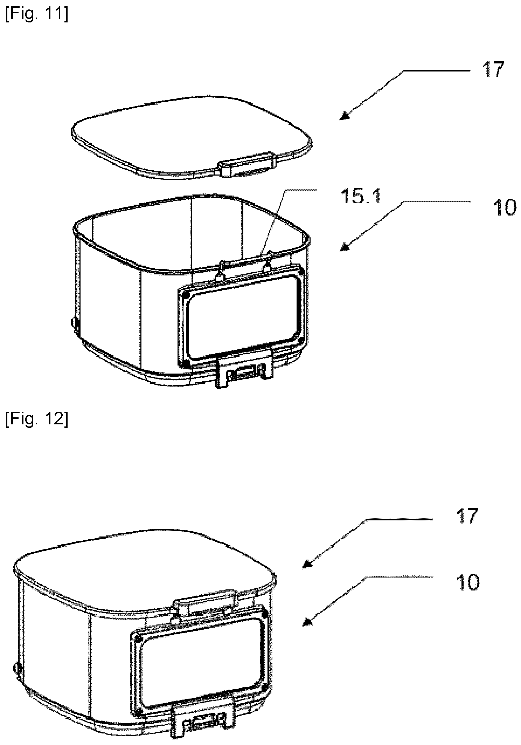

La figure 11 représente une vue en perspective de dessus de la cuve de cuisson 10 de la figure 2 ou 3, avec un couvercle 17 à accoupler sur la cuve de cuisson 10. La figure 12 représente une vue en perspective de dessus de la cuve de cuisson 10 de la figure 2 ou 3, avec le couvercle 17 accouplé sur la cuve de cuisson 10. On peut noter que le couvercle 17 comprend une portion d'accouplement destinée à s'accoupler avec la tige de support 15.1, par exemple par emboîtement élastique (clipsage). Ainsi, le couvercle 17 est parfaitement maintenu sur la cuve de cuisson 10.

La figure 13 représente une vue schématique en coupe de la cuve de cuisson 10 et de l'interface de préhension 20 de la figure 2 ou 3 avant accouplement, selon un plan parallèle au plan y-z du repère de la figure 2. On peut noter et garder en mémoire que :
- la fixation supérieure de cuve 15 comprend notamment une tige de support 15.1 et se trouve en regard figure 13 de la fixation supérieure de préhension 25 qui comprend notamment une forme en U orientée vers le haut
- la fixation inférieure de cuve 16 comprend notamment la tige de verrouillage 16.1 et se trouve en regard figure 13 de la fixation inférieure de préhension 26 qui comprend notamment un crochet mobile 26.1 et des crochets fixes 26.2.

La figure 14 représente la cuve de cuisson 10 et l'interface de préhension 20 de la figure 13, lors d'une première phase d'accouplement, au cours de laquelle :
- l'interface de préhension 20 est préalablement déplacée vers le bas, et
- la fixation supérieure de préhension 25 (qui comprend notamment une forme en U orientée vers le haut) est ensuite déplacée vers le haut pour engager la tige de support de la fixation supérieure de cuve 15 dans la forme en U de la fixation supérieure de préhension 25.

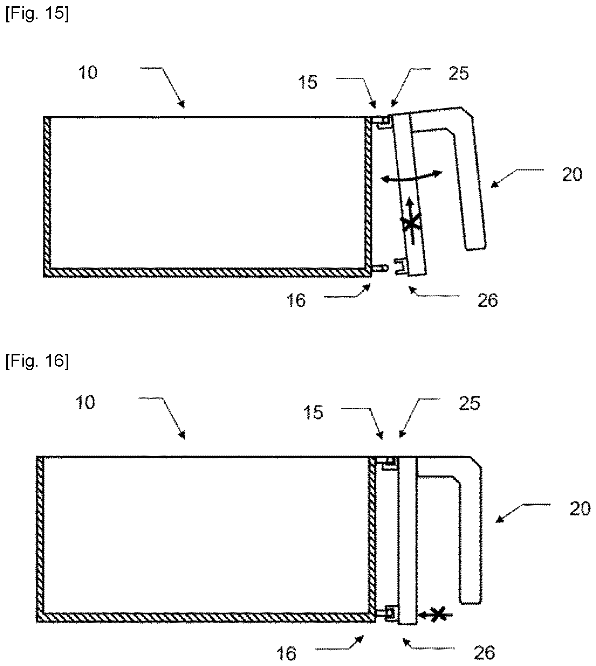

La figure 15 représente la cuve de cuisson 10 et l'interface de préhension 20 de la figure 13, lors d'une deuxième phase d'accouplement, au cours de laquelle :
- la première phase d'accouplement est terminée, si bien que la forme en U de la fixation supérieure de préhension 25 reçoit la tige de support de la fixation supérieure de cuve 15 de sorte à assurer une liaison pivot entre la cuve de cuisson 10 et l'interface de préhension 20,
- plus aucun mouvement vers le haut de la fixation supérieure de préhension 25 par rapport à la fixation supérieure de cuve 15 n'est possible,
- un pivotement entre la cuve de cuisson 10 et l'interface de préhension 20 est possible, notamment pour approcher la fixation inférieure de cuve 16 de la fixation inférieure de préhension 26.

La figure 16 représente la cuve de cuisson 10 et l'interface de préhension 20 de la figure 13, accouplées entre elles. En effet, la deuxième phase d'accouplement est terminée, avec la mise en contact entre la fixation inférieure de cuve 16 et la fixation inférieure de préhension 26. Le crochet mobile 26.1 (visible notamment figure 7) a pu pivoter et s'engager sur la tige de verrouillage 16.1, si bien qu'aucun mouvement relatif entre la cuve de cuisson 10 et l'interface de préhension 20 n'est possible.

Pour désaccoupler la cuve de cuisson 10 et l'interface de préhension 20, il suffit d'actionner le bouton de commande 22 pour faire pivoter le crochet mobile 26.1 et pouvoir dégager la fixation inférieure de cuve 16 de la fixation inférieure de préhension 26 par un mouvement de rotation relatif, et ensuite déplacer l'interface de préhension 20 vers le bas de la cuve de cuisson 10 pour dégager la forme en U de la fixation supérieure de préhension de la tige de support de la fixation supérieure de cuve 15.

On peut noter que si l'utilisateur actionne involontairement le bouton de commande 22 alors qu'il tient normalement l'ustensile de cuisson 30 par l'interface de préhension 20, la cuve de cuisson 10 ne se détachera pas, car le propre poids de la cuve de cuisson 10 :
- force la tige de support 15.1 à rester dans la forme en U de la fixation supérieure de préhension 25, et
- maintient les crochets fixes 26.2 en appui sur la cuve de cuisson 10. En conséquence, l'ustensile de cuisson 30 est simple à manipuler, l'accouplement ou le désaccouplement entre l'interface de préhension 20 et la cuve de cuisson 10 est aisé, la sécurité d'utilisation est garantie en supprimant les risques de détachement intempestifs, même si l'utilisateur actionne par mégarde le bouton de commande 22.

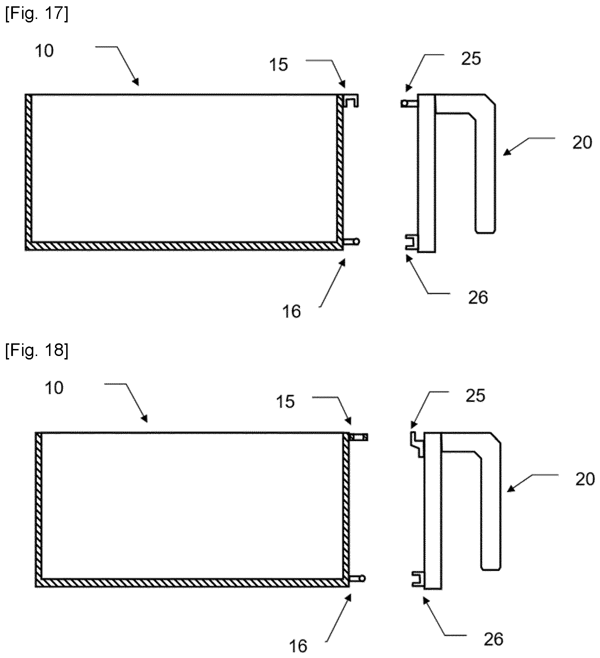

La figure 17 représente une première variante de réalisation de la cuve de cuisson et de l'interface de préhension de la figure 13, dans laquelle :
- la fixation supérieure de cuve 15 comprend notamment une forme en U orientée vers le bas qui se trouve en regard figure 17 de la fixation supérieure de préhension 25 qui comprend notamment une tige de support,
- de la même manière que sur la figure 13, la fixation inférieure de cuve 16 comprend notamment la tige de verrouillage 16.1 et se trouve en regard figure 17 de la fixation inférieure de préhension 26 qui comprend notamment le crochet mobile 26.1 et les crochets fixes 26.2. Ainsi, comme pour l'ustensile de cuisson 30 de la figure 13, la fixation supérieure de cuve 15 et la fixation supérieure de préhension 25 de la première variante de réalisation sont agencées pour imposer :
   . un mouvement de désaccouplement de la fixation supérieure de préhension 25 présentant une composante de déplacement de désaccouplement dirigée vers le bas de la cuve de cuisson 10,
   . un mouvement d'accouplement de la fixation supérieure de préhension 25 présentant une composante de déplacement d'accouplement dirigée vers le haut de la cuve de cuisson 10.

La figure 18 représente une deuxième variante de réalisation de la cuve de cuisson et de l'interface de préhension de la figure 13, dans laquelle :
- la fixation supérieure de cuve 15 comprend notamment un anneau de support qui se trouve en regard figure 18 de la fixation supérieure de préhension 25 qui comprend notamment un index orienté vers le haut,
- de la même manière que sur la figure 13, la fixation inférieure de cuve 16 comprend notamment la tige de verrouillage 16.1 et se trouve en regard figure 18 de la fixation inférieure de préhension 26 qui comprend notamment le crochet mobile 26.1 et les crochets fixes 26.2. Ainsi, comme pour l'ustensile de cuisson 30 de la figure 13, la fixation supérieure de cuve 15 et la fixation supérieure de préhension 25 de la deuxième variante de réalisation sont agencées pour imposer :
   . un mouvement de désaccouplement de la fixation supérieure de préhension 25 présentant une composante de déplacement de désaccouplement dirigée vers le bas de la cuve de cuisson 10,
   . un mouvement d'accouplement de la fixation supérieure de préhension 25 présentant une composante de déplacement d'accouplement dirigée vers le haut de la cuve de cuisson 10.

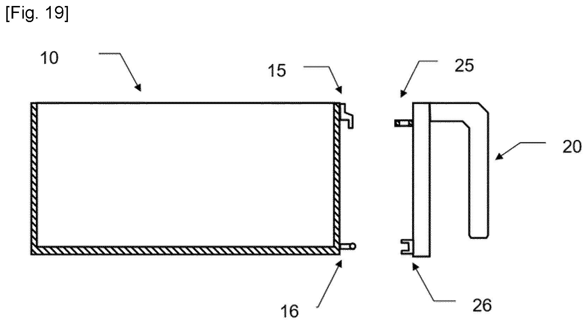

La figure 19 représente une troisième variante de réalisation de la cuve de cuisson et de l'interface de préhension de la figure 13, dans laquelle :
- la fixation supérieure de cuve 15 comprend notamment un index orienté vers le bas qui se trouve en regard figure 19 de la fixation supérieure de préhension 25 qui comprend notamment un anneau de support,
- de la même manière que sur la figure 13, la fixation inférieure de cuve 16 comprend notamment la tige de verrouillage 16.1 et se trouve en regard figure 19 de la fixation inférieure de préhension 26 qui comprend notamment le crochet mobile 26.1 et les crochets fixes 26.2. Ainsi, comme pour l'ustensile de cuisson 30 de la figure 13, la fixation supérieure de cuve 15 et la fixation supérieure de préhension 25 de la troisième variante de réalisation sont agencées pour imposer :
   . un mouvement de désaccouplement de la fixation supérieure de préhension 25 présentant une composante de déplacement de désaccouplement dirigée vers le bas de la cuve de cuisson 10,
   . un mouvement d'accouplement de la fixation supérieure de préhension 25 présentant une composante de déplacement d'accouplement dirigée vers le haut de la cuve de cuisson 10.

### Application industrielle

Un ustensile de cuisson selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention.

En particulier, on peut prévoir d'autres mises en œuvre structurelles pour verrouiller la cuve de cuisson et l'interface de préhension : une goupille mobile, un anti-retour élastique, un clipsage...

En ce qui concerne la détection de l'accouplement, on peut prévoir que la face arrière de l'interface de préhension vienne appuyer sur un piston à bascule en forme de L se trouvant sur la face avant de la cuve de manière à activer un switch disposé sur l'appareil.

En ce qui concerne la détection de l'accouplement, on peut prévoir toute sorte de mécanisme de transmission pour déplacer le témoin d'accouplement : un culbuteur comme dans l'exemple donné, mais on peut prévoir une bielle, un levier, une came, une piste de came, le capteur solidaire du boîtier peut même être agencé pour détecter directement la portion de paroi embarquée sur l'interface de préhension.

## Revendications

1. Appareil de préparation culinaire, comprenant :
- un boîtier (40), définissant un espace de cuisson et comprenant une ouverture d'accès vers l'espace de cuisson,
- un ustensile de cuisson (30), comprenant une cuve de cuisson (10) et une portion de paroi (23), dans lequel :
. la cuve de cuisson (10) est agencée pour être reçue dans l'espace de cuisson,
. la portion de paroi (23) est agencée pour être accouplée de manière réversible à la cuve de cuisson (10),
. la portion de paroi (23), accouplée à la cuve de cuisson (10) reçue dans l'espace de cuisson, est agencée pour au moins partiellement obstruer l'ouverture d'accès vers l'espace de cuisson,
- des moyens de cuisson comprenant des moyens de chauffage disposés entre un organe de ventilation et l'espace de cuisson,
l'appareil de préparation culinaire comprenant un dispositif de sécurité agencé pour :
- détecter une présence ou une absence de la portion de paroi (23) dans l'ouverture d'accès,
- inhiber au moins une fonction de cuisson si la portion de paroi (23) est absente de l'ouverture d'accès,
**caractérisé en ce que** le dispositif de sécurité est en outre agencé pour :
- détecter une présence ou une absence de la cuve de cuisson (10) dans l'espace de cuisson,
- inhiber au moins une fonction de cuisson si la cuve de cuisson (10) est absente de l'espace de cuisson.

2. Appareil de préparation culinaire selon la revendication 1, dans lequel l'ustensile de cuisson (30) comprend un dispositif de détection d'accouplement (27), comprenant au moins un témoin d'accouplement (27.1), mobile entre :
- une position de repos, occupée lorsque la cuve de cuisson (10) est désaccouplée de la portion de paroi (23),
- une position activée, occupée lorsque la cuve de cuisson (10) est accouplée à la portion de paroi (23).

3. Appareil de préparation culinaire selon la revendication 2, dans lequel le témoin d'accouplement (27.1) :
- est agencé sur l'une de la cuve de cuisson (10) et de la portion de paroi (23),
- est agencé pour être déplacé vers la position activée par l'autre de la cuve de cuisson (10) et de la portion de paroi (23).

4. Appareil de préparation culinaire selon l'une des revendications 2 ou 3, dans lequel le dispositif de détection d'accouplement (27) comprend un organe élastique de rappel agencé pour exercer sur le témoin d'accouplement (27.1) un effort de rappel vers la position de repos.

5. Appareil de préparation culinaire selon l'une des revendications 2 à 4, dans lequel le témoin d'accouplement (27.1) est agencé sur la portion de paroi (23), et dans lequel le dispositif de détection d'accouplement (27) comprend un organe de transmission tel qu'un culbuteur (27.3), comprenant :
- une portion d'entrée, agencée pour être actionnée par une portion de la cuve de cuisson (10) au moins lors d'une opération d'accouplement de la portion de paroi (23) sur la cuve de cuisson (10),
- une portion de sortie, engagée ou en contact avec le témoin d'accouplement (27.1).

6. Appareil de préparation culinaire selon la revendication 5, dans lequel la portion de la cuve de cuisson (10) agencée pour actionner la portion d'entrée est excentrée par rapport au corps (10.1) de la cuve de cuisson (10).

7. Appareil de préparation culinaire selon l'une des revendications 2 à 6, dans lequel le dispositif de sécurité comprend un détecteur d'accouplement (42) pour détecter le témoin d'accouplement (27.1) au moins en position activée.

8. Appareil de préparation culinaire selon l'une des revendications 1 à 7, dans lequel le dispositif de sécurité est agencé pour inhiber le fonctionnement des moyens de chauffage, et de préférence pour inhiber également le fonctionnement de l'organe de ventilation, si la portion de paroi (23) est absente de l'ouverture d'accès et cela même si la cuve de cuisson (10) est présente dans l'espace de cuisson, ou si la cuve de cuisson (10) est absente de l'espace de cuisson et cela même si la portion de paroi (23) est présente dans l'ouverture d'accès.

9. Appareil de préparation culinaire selon l'une des revendications 1 à 8, comprenant une interface homme machine (50), dans lequel le dispositif de sécurité est agencé pour envoyer un signal d'information si la portion de paroi (23) est absente de l'ouverture d'accès et/ou si la cuve de cuisson (10) est absente de l'espace de cuisson, afin de commander l'interface homme machine (50) pour l'envoi d'un message d'information à un utilisateur.

10. Appareil de préparation culinaire selon l'une des revendications 1 à 9, dans lequel l'ustensile de cuisson (30) comprend une interface de préhension (20), solidaire de la portion de paroi (23).
